(19) Europäisches Patentamt / European Patent Office / Office européen des brevets

(11) **EP 2 095 628 B1**

(12) **EUROPÄISCHE PATENTSCHRIFT**

(45) Veröffentlichungstag und Bekanntmachung des Hinweises auf die Patenterteilung:
**25.08.2010 Patentblatt 2010/34**

(51) Int Cl.:
*H04N 5/235* (2006.01)   *G06T 5/40* (2006.01)

(21) Anmeldenummer: **07847753.6**

(86) Internationale Anmeldenummer:
**PCT/EP2007/063248**

(22) Anmeldetag: **04.12.2007**

(87) Internationale Veröffentlichungsnummer:
**WO 2008/080736 (10.07.2008 Gazette 2008/28)**

(54) **BELICHTUNGSREGELUNG FÜR HDR-KAMERA**

LIGHTING CONTROL FOR HDR CAMERA

RÉGULATION DE L'ÉCLAIRAGE POUR UNE CAMÉRA HDR

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **27.12.2006 DE 102006061658**

(43) Veröffentlichungstag der Anmeldung:
**02.09.2009 Patentblatt 2009/36**

(73) Patentinhaber: **Continental Automotive GmbH**
**30165 Hannover (DE)**

(72) Erfinder:
• **BAUER, Jochen**
  **88131 Lindau (DE)**
• **RIEDER, Andre**
  **88142 Wasserburg (DE)**
• **WIEDEMANN, Christoph**
  **88142 Wasserburg (Bodensee) (DE)**

(56) Entgegenhaltungen:
EP-A- 0 805 416     WO-A-2004/068864
DE-A1- 10 318 499   US-A- 5 668 890

# EP 2 095 628 B1

**Beschreibung**

Die Erfindung betrifft die Steuerung von Bildwandlern, sowohl solche, die eine lineare Empfindlichkeit über den gesamten Beleuchtungsbereich aufweisen, als auch solche, die eine hohe Empfindlichkeit bei niedrigen Beleuchtungsniveaus und eine niedrige Empfindlichkeit bei hohen Beleuchtungsniveaus aufweisen.

Bildwandler dienen der Umwandlung optischer Bilder in Bildsignale, die das optische Bild repräsentieren. Entsprechende Bildwandler werden häufig auch als Bildsensoren bezeichnet. Optimale Bildergebnisse erhält man, wenn der in den Bildsignalen enthaltene Bildinformationswert maximal ist. Dies ist der Fall, wenn die Bildsignale eines Bildes den für sie verfügbaren Wertebereich, das ist der Dynamikbereich des Bildwandlers, vollständig ausschöpfen. Mit anderen Worten erfolgt die Optimierung so, dass die bei einem Einzelbild von den einzelnen Bildelementen des Bildwandlers ausgegebenen Signalwerte den gesamten Signalbereich des Bildwandlers vom minimalen bis zum maximalen Signalwert einnehmen. Zur vereinfachten Darstellung wird im Folgenden der Begriff Bild für die Gesamtheit der Bildsignale verwendet, die jeweils ein bestimmtes optisches Bild repräsentieren.

Die Umwandlung der Helligkeitswerte eines Bildelementes des optischen Eingangsbildes in einen Signal- bzw. Grauwert des Ausgangsbildes wird wesentlich von der Empfindlichkeit der einzelnen Bildwandlerelemente bestimmt. Die Empfindlichkeit gibt den funktionellen Zusammenhang zwischen Lichtintensität und Ausgangssignal für ein Bildwandlerelement an. Je nach Bauart des Bildwandlers kann die Empfindlichkeit von einer linearen oder einer logarithmischen Funktion gebildet werden.

Bei einer linearen Empfindlichkeit werden gleiche Intensitätsunterschiede in gleiche Unterschiede des Bildelementausgangssignals umgesetzt. Bei sehr großen Helligkeitsunterschieden innerhalb eines optischen Bildes spiegeln sich kleinere Variationen der Lichtintensitäten daher kaum noch in den zugehörigen Bildsignalen wider; denn die Anpassung der Helligkeitsunterschiede eines optischen Bildes an den Dynamikbereich des Bildwandlers bewirkt, dass bei zunehmenden Helligkeitsunterschieden kleinere Helligkeitsvariationen sich in verringerten Bildsignalunterschieden abbilden. Vor allen in den dunkleren Bildbereichen der Bilder sind dann oftmals keinerlei Strukturen mehr erkennbar.

Dies ist insbesondere beim Einsatz von Bildwandlern in Kraftfahrzeugen nachteilig, wenn die Bildwandler von Fahrassistenzsystemen genutzt werden, die auf bestimmte Funktionen des Fahrzeugs Einfluss nehmen und unter bestimmten Umständen sogar in die Fahrzeugführung eingreifen können. Beispielsweise kann ein Spurassistent die Umgebung eines Fahrzeugs mithilfe der von einem Bildwandler erhaltenen Bilder überwachen und bei Gefahr des Abkommens von der Fahrbahn in die Fahrzeuglenkung eingreifen. Bei Tunnelein- und -ausfahrten, bei Sonnenreflexionen auf der Fahrbahn oder bei Schlagschattenbildung weisen die auf den Bildwandler projizierten optischen Abbildungen im Allgemeinen so extreme Helligkeitsunterschiede auf, dass das Fahrassistenzsystem den Rand der Fahrbahn oftmals nicht mehr identifizieren kann.

Bei Bildwandlern mit einer logarithmischen Empfindlichkeitskennlinie werden die beschriebenen Nachteile überwunden, indem die Bildwandlung Intensitätsunterschiede im oberen Helligkeitsbereich zunehmend komprimiert. Diese Bildwandler sind jedoch sehr teuer.

Als kostengünstige Alternative haben sich Bildwandler mit einer so genannten Linlog-Kennlinie bewährt, bei denen sich die Empfindlichkeitskennlinie aus 2 oder mehr linearen Kennlinienabschnitten unterschiedlicher Steigung zusammensetzt. Die Empfindlichkeitskennlinie entspricht einer (mehrfach) geknickten Gerade, deren Steigung im Bereich höherer Beleuchtungsniveaus geringer als im Bereich niedrigerer Beleuchtungsniveaus ist. Damit werden Intensitätsunterschiede im oberen Helligkeitsbereich komprimierter umgewandelt als Intensitätsunterschieden im unteren Helligkeitsbereich, womit eine der logarithmischen Bildwandlung ähnliche Signalerzeugung erreicht wird.

Die Empfindlichkeitskennlinie kann bei Linlog-Bildwandlern über verschiedene Steuerparameter an eine jeweilige Beleuchtungssituation angepasst werden. Die Steuerparameter sind bei den verschiedenen Linlog-Bildwandlern verschieden und weisen im Allgemeinen gegenseitige Abhängigkeiten auf. Sie bilden einen Parametersatz, der mittels eines Kameramodells funktional mathematisch behandelt werden kann.

Ein Parametersatz kann beispielsweise von Belichtungszeit, Verstärkung, Offset, LinLog-Spannung(en) und LinLog-Zeitsteuerung gebildet werden, wobei Belichtungszeit und Verstärkung eine multiplikative Skalierung der Kennlinie bewirken. Die Verstärkung hat darüber hinaus auch Auswirkungen auf die Offset- und Linlog-Spannung(en). Ein Offset bewirkt eine Verschiebung der Kennlinie im Sinne einer Addition oder Subtraktion von Werten. Über die Linlog-Spannung(en) wird die Höhe des (bzw. der) Knickpunkte bestimmt, während sich die LinLog-Zeitsteuerung auf die Steigungen der einzelnen Kennlinienabschnitte auswirkt.

Die von Kamerasystemen eines Kraftfahrzeugs während des Fahrbetriebs erfassten Szenen zeigen häufig eine schnell wechselnde Dynamik, d.h. die Helligkeitsunterschiede innerhalb einer von dem jeweiligen Kamerasystem erfassten Szene können sich binnen kürzester Zeit ändern. Dies erfordert eine schnelle automatische Anpassung der Empfindlichkeitskennlinie des im Kamerasystem verwendeten Bildwandlers an die sich verändernde Helligkeitsverteilung innerhalb weniger aufeinander folgender Einzelbilder.

Die Anpassung der Empfindlichkeitskennlinie an die jeweilige Helligkeitsverteilung des auf die photosensitive Fläche eines Bildwandlers projizierten Bildes, d.h. die Belichtungsregelung, erfolgt gegenwärtig durch Erhöhen oder Erniedrigen der Belichtungszeit bis das Bild eine bestimmte Anzahl gesättigter Bildsignalwerte aufweist. Der Offset des Bildes wird so geregelt, dass für spezielle dunkle Bildpunkte ein definierter Grauwert erreicht wird und dann üblicherweise nicht mehr geändert. Außer bei Bildwandler mit einer linearen oder logarithmischen Empfindlichkeitskennlinie wird dieses Verfahren auch für Bildwandler mit einer High-Dynamic-Range-(HDR) Funktionalität verwendet, wobei die relativen Knickpunkte der Empfindlichkeitskennlinie fest vorgegeben sind. Die gegenwärtig übliche Anpassung der Empfindlichkeitskennlinie ist jedoch zu langsam, um auch bei sich schnell verändernde Helligkeitssituationen binnen weniger aufeinander folgender Einzelbilder ausreichende Bildkontraste zu erhalten.

DE 103 18 499 A1 beschreibt ein Verfahren zur Einstellung von Belichtungsparametern eines Bildsensors, wobei die Belichtungsparameter in Abhängigkeit von Mittelwert, Median, Maximum, Minimum oder einer Quantile der Grauwertverteilung wenigstens eines Bildausschnitts eingestellt wird.

Es ist daher Aufgabe der vorliegenden Erfindung ein Verfahren zur schnellen und automatischen Anpassung der Empfindlichkeitskennlinie eines Bildwandlers an eine sich verändernde Helligkeitsverteilung innerhalb des auf den Bildwandler projizierten optischen Bildes anzugeben.

Die Aufgabe wird gemäß den unabhängigen Ansprüchen der Erfindung gelöst.

Die Erfindung umfasst ein Verfahren zur Anpassung der Empfindlichkeitskennlinie eines Bildwandlers an die Lichtintensitätsverteilung eines auf die photosensitive Fläche des Bildwandlers projizierten optischen Bildes, wobei das Verfahren Schritte aufweist zum Erstellen einer Häufigkeitsverteilung der Bildsignalwerte des von dem Bildwandler umgewandelten optischen Bildes, zum Bestimmen von einem oder mehreren Quantilen der Häufigkeitsverteilung der Bildsignalwerte, und zum Bestimmen eines angepassten Parametersatzes von Einstellwerten des Bildwandlers auf der Grundlage des oder der zuvor bestimmten Quantile der Häufigkeitsverteilung.

In diesem Zusammenhang wird darauf hingewiesen, dass die in dieser Beschreibung und den Ansprüchen zur Aufzählung von Merkmalen verwendeten Begriffe "umfassen", "aufweisen", "enthalten", "beinhalten" und "mit", sowie deren grammatikalische Abwandlungen, generell das Vorhandensein von Merkmalen, wie z.B. Verfahrensschritten, Einrichtungen, Bereichen, Größen und dergleichen mehr angeben, jedoch in keiner Weise das Vorhandensein anderer oder zusätzlicher Merkmale oder Gruppierungen von anderen oder zusätzlichen Merkmalen ausschließen.

Die Erfindung umfasst ferner eine Vorrichtung zur Anpassung der Empfindlichkeitskennlinie eines Bildwandlers an die Lichtintensitätsverteilung eines auf die photosensitive Fläche des Bildwandlers projizierten optischen Bildes mit einer Histogrammeinrichtung zum Erstellen einer Häufigkeitsverteilung der Bildsignalwerte des von dem Bildwandler umgewandelten optischen Bildes, einer Quantilbestimmungseinrichtung zum Bestimmen von einem oder mehreren Quantilen der Häufigkeitsverteilung der Bildsignalwerte, und einer Einstellungsberechnungseinrichtung zum Erstellen eines angepassten Parametersatzes von Einstellwerten des Bildwandlers auf der Grundlage des oder der bestimmten Quantile der Häufigkeitsverteilung.

Weiterhin umfasst die Erfindung ein Computerprogrammprodukt zur Anpassung der Empfindlichkeitskennlinie eines Bildwandlers an die Lichtintensitätsverteilung eines auf die photosensitive Fläche des Bildwandlers projizierten optischen Bildes, wobei das Computerprogrammprodukt eine Reihe physikalisch unterscheidbarer Zustände aufweist, die durch eine Datenverarbeitungseinrichtung lesbar und ausführbar sind und die eine Abfolge von Instruktionen darstellen, die auf der Datenverarbeitungseinrichtung ausgeführt ein dem obigen entsprechendes Verfahren durchführen und die Einrichtung einer wie oben angegebenen Vorrichtung in der Datenverarbeitungseinrichtung bewirken.

Die Erfindung ermöglicht eine äußerst schnelle Belichtungsregelung, die eine korrekte Einstellung des Bildwandlers in einem überwiegenden Teil der Fälle bereits innerhalb des ersten oder zweiten Folgebilds ermöglicht.

Die Erfindung wird in ihren abhängigen Ansprüchen weitergebildet.

Um zwischen verschiedenen Betriebsarten des Bildwandlers wählen zu können, umfasst der angepasste Parametersatz günstigerweise zumindest einen Betriebsarteinstellwert zur Einstellung einer Betriebsart des Bildwandlers. Für eine umfassende Belichtungsregelung umfasst der angepasste Parametersatz ferner vorteilhaft Werte zur Einstellung von Offset, Belichtungszeit und Gain des Bildwandlers.

Für eine Regelung der Einstellwerte des Bildwandlers dahingehend, dass die Häufigkeitsverteilung eines Folgebildes den Dynamikbereich des Bildwandlers, d.h. dessen verfügbaren Bereichs an Grauwerten, vollständig ausnutzt, erfolgt die Bestimmung des angepassten Parametersatzes von Einstellwerten auf der Grundlage eines ersten Quantils und eines zweiten Quantils, wobei die Ordnung des zweiten Quantils höher als die Ordnung des ersten Quantils ist.

Um die für einen optimalen Bildkontrast günstigste Betriebsart des Bildwandlers auszuwählen, umfasst das Verfahren vorzugsweise einen Schritt zur Bestimmung des Betriebsarteinstellwerts auf der Grundlage von zumindest einem weiteren Quantil. Die Ordnung des zumindest einen weiteren Quantils ist dabei bevorzugt höher als die Ordnung des ersten Quantils und niedriger als die Ordnung des zweiten Quantils gewählt, sodass eine Änderung der Empfindlichkeit des Bildwandlers ab einer bestimmten Lichtintensität gewählt werden kann.

Entsprechend einer vorteilhaften Weiterentwicklung der Erfindung umfasst das Verfahren einen Schritt zum Bestimmen der Häufigkeitsverteilung der Lichtintensitäten an der photosensitiven Fläche des Bildwandlers, wobei die Bestimmung auf der Grundlage eines mathematischen Modells der Umwandlung einer Lichtintensität in ein Bildsignal mit den aktuellen Einstellwerten des Bildwandlers als Parameter erfolgt. In einer bevorzugten Weiterentwicklung wird der angepasste Parametersatz von Einstellwerten des Bildwandlers vorteilhaft so erstellt, dass unter dessen Zugrundelegen das mathematische Modell aus der zuvor bestimmten Häufigkeitsverteilung der Lichtintensitäten eine angepasste Häufigkeitsverteilung ergibt, bei der das erste Quantil einem ersten Zielwert, das zumindest eine weitere Quantil einem weiteren Zielwert und das zweite Quantil einem zweiten Zielwert entspricht. Zum Rückrechnen auf die Lichtintensitäten des optischen Bildes umfasst die Einstellungsberechnungseinrichtung vorzugsweise eine Rückrechnungseinrichtung, die ausgebildet ist, die Häufigkeitsverteilung der Lichtintensitäten an der photosensitiven Fläche des Bildwandlers zu bestimmen, wobei die Bestimmung auf der Grundlage eines mathematischen Modells der Umwandlung einer Lichtintensität in ein Bildsignal mit den aktuellen Einstellwerten des Bildwandlers als Parameter erfolgt.

In einer bevorzugten Ausführungsform umfasst das Verfahren weitere Schritte zum Vergleichen eines Quotienten aus der für das zumindest eine weitere Quantil bestimmten Lichtintensität und der für das zweite Quantil bestimmten Lichtintensität mit einem Schwellwert, und zum Schalten des Bildwandlers in eine erste Betriebsart, wenn der Quotient größer als der Schwellwert ist, und zum Schalten des Bildwandlers in eine zweite Betriebsart, wenn der Quotient kleiner oder gleich dem Schwellwert ist. Zur Durchführung des Vergleichs umfasst die Einstellungsberechnungseinrichtung zweckmäßig eine Vergleichseinrichtung zum Vergleichen des Quotienten mit einem Schwellwert.

Die Einstellung der Betriebsart kann günstig mithilfe einer, von der Einstellungsberechnungseinrichtung umfassten Betriebsarteinstelleinrichtung vorgenommen werden. Auf der Grundlage des Schwellwertvergleichs kann eine Ungleichverteilung in der Häufigkeit der Grauwerte erkannt und der Bildwandler vorteilhaft in die Betriebsart gesteuert werden, in der eine gleichmäßigere Verteilung der Häufigkeit der Grauwerte erreicht werden kann. Eine entsprechende schnelle Anpassung an die Beleuchtungssituation des optischen Bildes kann erreicht werden, wenn der der Bildwandler in der ersten Betriebsart eine lineare Empfindlichkeitskennlinie aufweist und in der zweiten Betriebsart eine Empfindlichkeitskennlinie mit zumindest zwei linearen Kennlinienabschnitten unterschiedlicher Steigung aufweist.

Zur Belichtungsregelung eines Linlog-Bildwandlers umfasst der angepasste Parametersatz zweckmäßig Werte zur Einstellung von Linlog-Timing und Linlog-Spannung des Bildwandlers, wobei diese Einstellwerte im Hinblick auf eine schnelle Belichtungsregelung vorzugsweise auf der Grundlage des zumindest einen weiteren Quantils und des zweiten Quantils bestimmt werden. Zur schnellen Nachführung der Belichtungseinstellung eine Bildwandlers, d.h. der schnellen Erzeugung des angepassten Parametersatzes, werden die Werte des angepassten Parametersatzes zur Einstellung von Offset, Belichtungszeit und Gain des Bildwandlers vorzugsweise auf der Grundlage des ersten Quantils und des zumindest einen weiteren Quantils bestimmt.

Weitere Merkmale der Erfindung ergeben sich aus der folgenden Beschreibung erfindungsgemäßer Ausführungsbeispiele in Verbindung mit den Ansprüchen sowie den Figuren. Die einzelnen Merkmale können bei einer Ausführungsform gemäß der Erfindung je für sich oder zu mehreren verwirklicht sein. Bei der nachfolgenden Erläuterung einiger Ausführungsbeispiele der Erfindung wird auf die beiliegenden Figuren Bezug genommen, von denen

Figur 1    den Aufbau eines Bildwandlers mit einem CMOS-Chip zeigt,

Figur 2    eine Empfindlichkeitskennlinie eines im Linlog-Modus betriebenen Bildwandlers zeigt,

Figur 3    ein Histogramm von Grauwerten mit den aktuellen Wer- ten und den Zielwerten für das 0,02- und das 0,98-Quantil zeigt,

Figur 4    ein Histogramm angepasster Grauwerte zeigt, bei dem das 0,02- und das 0,98-Quantil dem jeweiligen Zielwert entspricht,

Figur 5    eine Linlog-Empfindlichkeitskennlinie mit Angabe des Knickpunkts veranschaulicht,

Figur 6    ein Verfahren zur Belichtungsregelung eines Linlog- Bildwandlers anhand eines Flussdiagramms veranschaulicht, und

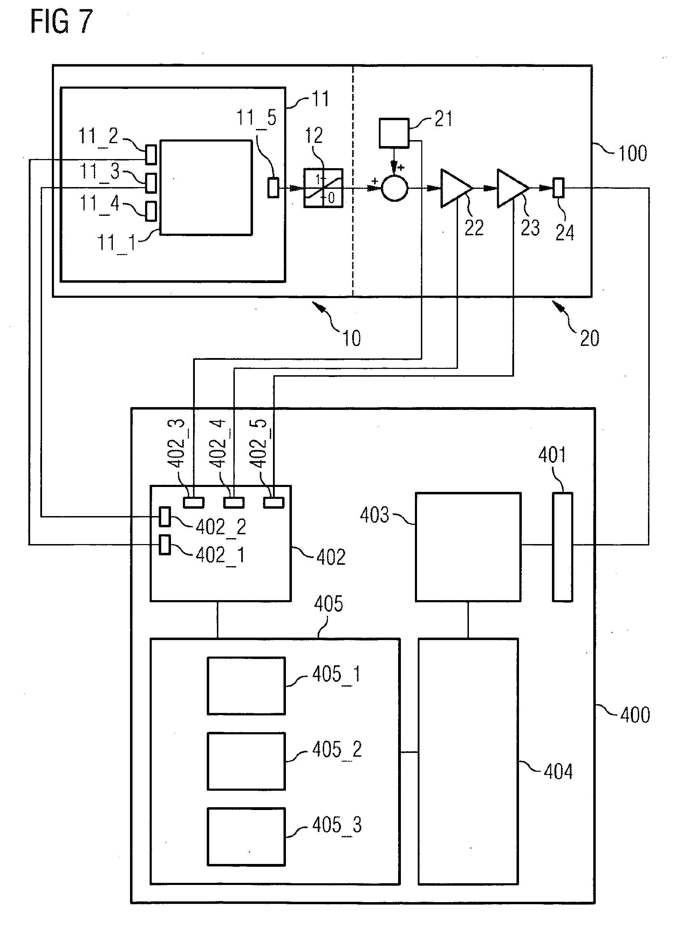

Figur 7    ein Blockschaltbild einer Belichtungsregelungsvor- richtung zeigt.

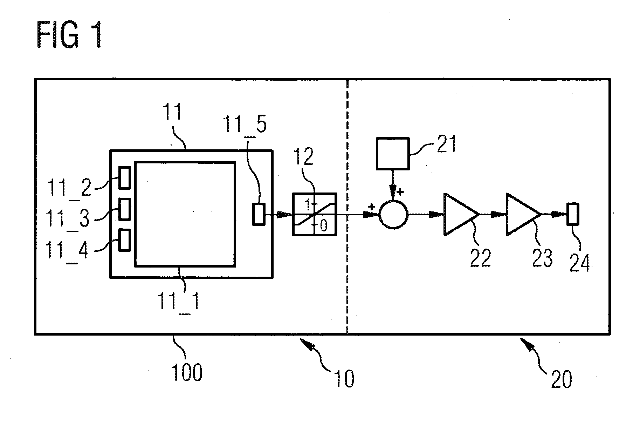

In der Figur 1 ist ein Beispiel für einen Aufbau eines Bildwandlers 100 dargestellt, der wahlweise mit einer Linlog- oder mit einer linearen Empfindlichkeitskennlinie betrieben werden kann. Der Bildwandler weist eine Bildwandlungseinrichtung 10 und eine nachgeschaltete Verstärkungseinrichtung 20 auf.

Die Verstärkungseinrichtung 20 setzt die Ausgangsspannung der Bildwandlungseinrichtung 10 in Graustufen um, wobei die Umsetzung die den Einstellungen des A/D-Wandlers (Analog-Digital-Wandlers) 23, das Gain (Verstärkungsfaktor) des VCA (Voltage Controlled Amplifier = Verstärker, dessen ausgangsseitiger Pegel mittels einer Steuerspannung eingestellt werden kann) 22 und der mittels der steuerbaren Spannungsquelle 21 eingebrachten Offsetspannung beeinflusst werden kann. Die Grauwerte werden am Ausgang 24 des Analog-Digital-Wandlers 23 ausgegeben.

Die Bildwandlungseinrichtung 10 umfasst im vorgestellten Beispiel einen CMOS-Chip 11 mit einer photosensitiven Fläche 11_1, die zur Wandlung eines auf sie projizierten optischen Bildes in elektrische Signale ausgebildet ist, die am Ausgang 11_5 des Chips 11 zur Weiterverarbeitung zur Verfügung stehen. Die Wandlung kann mittels geeigneter Einstellungen gesteuert werden, die über entsprechende Signale an den dafür vorgesehenen Eingängen des CMOS-Chips 11 vorgenommen werden können. Im Beispiel der Figur 1 sind jeweils ein Eingang für die Einstellung der Belichtungszeit 11_2, der Betriebsart 11_3 (linearer oder Linlog-Modus) und der Linlog-Parameter 11_4 vorgesehen. Die Beschränkung des Ausgangssignals des CMOS-Chips 11 wird durch das Sättigungsmodul 12 modelliert.

Da der tatsächliche Spannungspegel am Ausgang 11_5 des CMOS-Chips für die Darstellung der Erfindung ohne Bedeutung ist, wird in den folgenden Ausführung eine normalisierte Ausgangsspannung $U_C$ mit einem Wertebereich von 0 bis 1 zugrundegelegt, wobei 1 der Sättigungsspannung des CMOS-Chips 11 entspricht.

Die den jeweiligen normalisierten Spannungen zugeordneten Grauwerte h ergeben sich nach folgender Gleichung:

$$h = g_{VCA} g_{AD} \left( U_C + U_{off} \right) \qquad\qquad (1)$$

worin $g_{VCA}$ das Gain des VCA 22, $g_{AD}$ das Gain des A/D-Wandlers 23, $U_C$ die normalisierte Ausgangsspannung des CMOS-Chips 11 und $U_{off}$ die Offsetspannung der steuerbaren Spannungsquelle 21 bedeuten.

Der Zusammenhang zwischen der normalisierten Ausgangsspannung $U_C$ des CMOS-Chips 11 ist im linearen Betrieb durch folgende Gleichung gegeben:

$$U_C = l\, t_I \qquad\qquad (2)$$

mit der auf die Photodiode auftreffenden normalisierten Lichtintensität $l$.

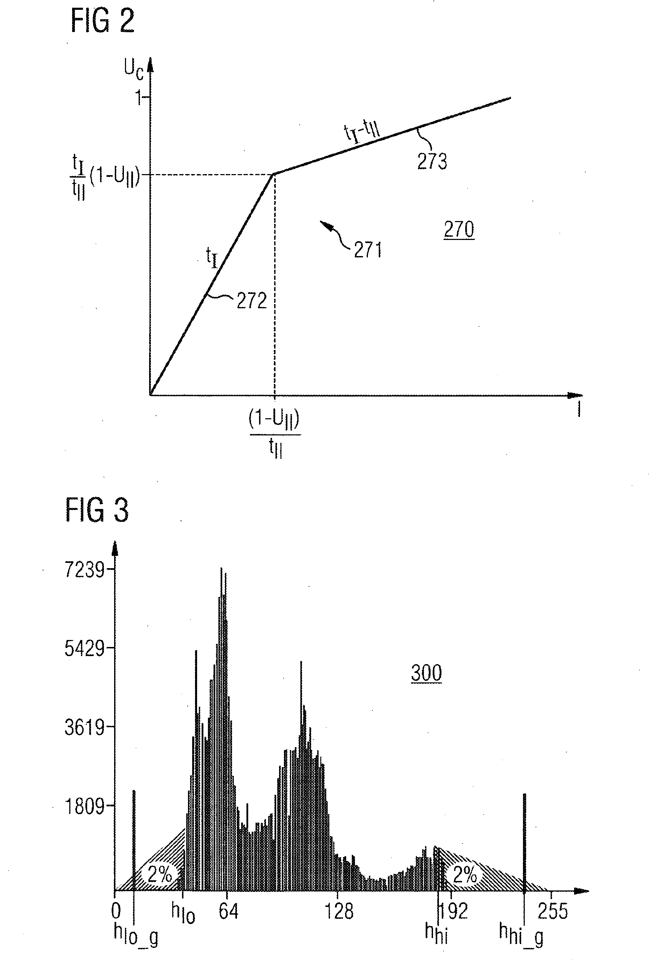

Beim Betrieb im Linlog-Modus erhält man keine lineare, sondern eine wie in Figur 2 dargestellte Empfindlichkeitskennlinie. Die Lage der Knickpunkte und der Steigungen der Empfindlichkeitkennlinie werden durch die Linlog-Parameter $U_{11}$ (Linlog-Spannung) und $t_{11}$ (Linlog-Zeit) beeinflusst.

Man erhält für die $U_C$-Funktion:

$$U_C = t_I l \qquad\qquad \text{für} \qquad l < \frac{1 - U_{11}}{t_{11}} \qquad (3a)$$

und

$$1 - U_{11} + \left( t_I - t_{11} \right) l \qquad \text{für} \qquad l \geq \frac{1 - U_{11}}{t_{11}} \qquad (3b)$$

Eine graphische Darstellung dieser Funktion ist im Diagramm 270 der Figur 2 gezeigt. Die $U_C$-Funktion gibt die Empfindlichkeitskennlinie 271 des Bildwandlers im Linlog-Modus wider. Sie besteht aus zwei Kennlinienabschnitten 272 und 273, wobei der erste Kennlinienabschnitt die Empfindlichkeit des Bildwandlers bei einer Lichtintensität unterhalb des durch {(1-$U_{11}$)/$t_{11}$} gegebenen Werts und der zweite Kennlinienabschnitt die Empfindlichkeit des Bildwandlers oberhalb des durch {(1-$U_{11}$)/$t_{11}$} gegebenen Werts repräsentiert.

Um von den, von dem Bildwandler 100 ausgegebenen Grauwerten auf die einem Grauwert entsprechende Lichtintensität an einem Bildwandlerelement des CMOS-Chips 11 schließen zu können, muss Gleichung (1) so umgeformt werden, dass man die zu einem Grauwert gehörige Spannung $U_C$ am Ausgang des CMOS-Chips 11 erhält:

$$U_C = \frac{h}{g_{VCA} g_{AD}} - U_{off} \qquad\qquad (4)$$

Die der Ausgangsspannung $U_C$ entsprechende Lichtintensität 1 eines Bildpunkts an der photosensitiven Fläche des CMOS-Chips 11 ergibt bei Betrieb des Bildwandlers in der Betriebsart mit linearer Empfindlichkeitskennlinie nach Gleichung (2) zu:

$$1 = \frac{U_C}{t_I} \qquad\qquad (5)$$

Bei aktiver Linlog-Betriebsart erhält mit den Gleichungen (2) und (5):

$$1 = \frac{U_C}{t_I} \qquad \text{für} \qquad U_C < \frac{t_I}{t_{ll}}\left(1 - U_{ll}\right) \qquad (6a)$$

und

$$1 = \frac{U_C + U_{ll} - 1}{t_I - t_{ll}} \qquad \text{für} \qquad U_C \geq \frac{t_I}{t_{ll}}\left(1 - U_{ll}\right) \qquad (6b)$$

Ziel einer Belichtungssteuerung ist es, den Dynamikbereich des Bildwandlerausgangs soweit als möglich auszunutzen. Dies bedeutet, dass die unteren Grauwerte möglichst niedrige Werte aufweisen ohne dass zu viele schwarze Bildelemente vorhanden sind, und dass die oberen Grauwerte möglichst hohe Werte annehmen, ohne dass zu viele gesättigte (weisse) Bildelemente vorhanden sind. Als weiteres Ziel wird eine möglichst gleichmäßige Häufigkeitsverteilung der Grauwerte im Histogramm des Bildes angestrebt um einen möglichst über das gesamte Bild einen hohen Kontrast zu erzielen.

Hierzu werden die Einstellparameter des Bildwandlers 100 so gewählt, dass bestimmte Quantile des Histogramms der Grauwerte vorgegebene Zielwerte erreichen.

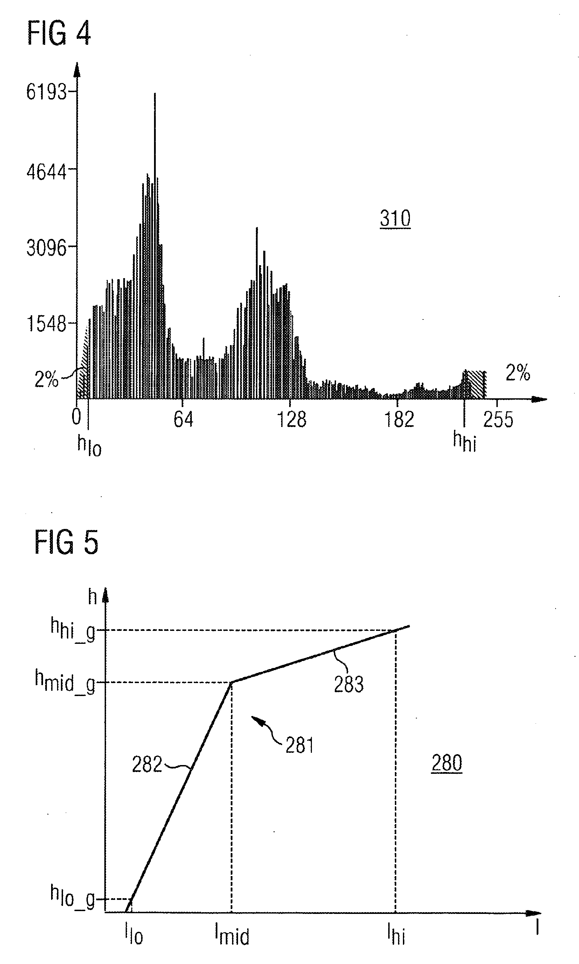

In der Figur 3 ist ein Histogramm 300 der Grauwerte eines Bildes dargestellt, das mittels des im linearen Modus betriebenen Bildwandlers 100 von einem, auf die photosensitive Fläche des CMOS-Chips projizierten optischen Bildes erzeugt wurde. In dem Histogramm sind das 0,02-Quantil $h_{lo}$ und das 0,98-Quantil $h_{hi}$ markiert. Unter 0,02-Quantil wird ein Quantil der Ordnung 0,02 verstanden, das den Grauwert des Histogramms angibt, unterhalb dessen sich 2% der Bildpunkte mit niedrigeren Grauwerten befinden. Diese Definition gilt analog für Quantile anderer Ordnung. Zum Beispiel gibt das Quantil der Ordnung 0,98 (0,98-Quantil) den Grauwert an, oberhalb und einschließlich dessen sich 2% der Bildpunkte mit höheren oder gleichen Grauwerten befinden. Ebenfalls angegeben sind in dem Histogramm der Figur 3 die Zielwerte für das 0,02-Quantil $h_{lo\_g}$ und das 0,98-Quantil $h_{hi\_g}$. Die Anpassung der Einstellparameter des Bildwandlers erfolgt nun zunächst (unter Beibehalten des linearen Betriebsmodus des Bildwandlers) so, dass bei erneuter Wandlung des optischen Bildes das 0,02-Quantil $h_{lo}$ und das 0,98-Quantil $h_{hi}$ die Zielwerte $h_{lo\_g}$ und $h_{hi\_g}$, wie im Histogramm 310 der Figur 4 veranschaulicht ist, erreichen.

Ein Problem stellen hierbei gesättigte Bildelemente dar, d.h. Bildelemente, deren Grauwert unabhängig von der tatsächlichen Lichtintensität dem Höchstwert $h_{max}$, d.h. weiß entspricht. Diese können dazu führen, dass sich das 0,98-Quantil nicht mehr genau bestimmen lässt und dem maximalen Grauwert entspricht. Um dem zu begegnen wird das 0,98-Quantil $h_{hi}$ abhängig von der Anzahl der gesättigten Bildelemente erhöht, wobei Unstetigkeiten zu berücksichtigen sind. Entspricht das 0,98-Quantil dem höchsten Grauwert $h_{max}$, hat sich eine Berechnung eines korrigierten 0,98-Quantils $h_{hi}$ gemäß der folgenden Gleichung als nützlich erwiesen:

$$h_{hi} = h_{max}(1 + 5(\frac{n_{sat}}{n} - 1 + p_{hi})) \qquad (7)$$

worin n die Gesamtzahl der Bildelemente, $n_{sat}$ die Anzahl der gesättigten Bildelemente und $p_{hi}$ die Ordnung des Quantils (im vorliegenden Beispiel 0,98 bzw. 98%) bedeuten. Der empirisch bestimmte Faktor 5 resultiert in einem guten Steuerverhalten, d.h. es wird eine schnelle aber nicht überschwingende Belichtungsregelung erreicht.

Damit die Quantile ihre Zielwerte bei einer Belichtungsregelung mit einer linearen Empfindlichkeitskennlinie schnell erreichen, wird unter Verwendung der oben vorgestellten mathematischen Modellvorstellung des Bildwandlers von Grauwerten auf die ihnen zugrunde liegenden Lichtintensitäten des optischen Bildes zurückgerechnet. Mit anderen Worten wird das auf Grauwerten basierende Histogramm der Bildsignale mithilfe der oben abgeleiteten Gleichungen in ein Lichtintensitäts-Histogramm des optischen Bildes umgerechnet. Diese Umrechnung erhält man durch Einsetzen von Gleichung (4) in Gleichung (5):

$$l = \frac{1}{t_I}\left(\frac{h}{g_{VCA}g_{AD}} - U_{off}\right) \qquad (8)$$

Aus dem unter Verwendung von Gleichung (8) berechneten Histogramm der Lichtintensitäten können nun die zu den Zielwerten des 0,02- und 0,98-Quantils gehörenden Lichtintensitäten ermittelt werden. Daraus ergeben sich die Zielwerte für die entsprechenden Quantile des Grauwert-Histogramms durch Einsetzen von Gleichung (2) in Gleichung (1) zu:

$$h_{lo\_g} = g_{VCA(+1)}g_{AD}\left(l_{lo}t_{I(+1)} + U_{off(+1)}\right)$$
$$h_{hi\_g} = g_{VCA(+1)}g_{AD}\left(l_{hi}t_{I(+1)} + U_{off(+1)}\right) \qquad (9)$$

Daraus kann der neue, an die Lichtintensitätsverteilung des optischen Bildes angepasste, Parametersatzes von Einstellwerten $t_{I(+1)}$, $g_{VCA(+1)}$ und $U_{off(+1)}$ des Bildwandlers ermittelt werden.
Da das Gleichungssystem (9) nur zwei Gleichungen für drei zu bestimmende Einstellwerte aufweist, kann nur für einen Einstellwert eine explizite Lösung gefunden werden. Eine zweite Lösung ist nur für eine Kombination der anderen beiden Einstellparameter möglich. Es hat sich als vorteilhaft erwiesen, das Gleichungssystem (9) nach dem Produkt von Integrationszeit und Gain aufzulösen, da dieses Produkt den Abstand zwischen $h_{lo}$ und $h_{hi}$ steuert. Man erhält somit aus den Gleichungen (9):

$$p = t_{I(+1)}\,g_{VCA(+1)} = \frac{h_{lo\_g} - h_{hi\_g}}{g_{AD}\left(l_{hi} - l_{lo}\right)}$$
$$U_{off(+1)} = \frac{h_{lo\_g}}{g_{VCA(+1)}\,g_{AD}} - l_{lo}\,t_{I(+1)} \qquad (10)$$

Die Gleichung für die neue Integrationszeit und das neue Gain kann daher relativ zur alten Integrationszeit und zum alten Gain geschrieben werden. Dies ist insofern interessant, als es beweist, das sich Unbestimmtheiten in den Einstellwerten des Bildwandlers nicht auf diese Gleichung auswirken. Denn die Kenntnis der Lichtintensitäten ist bei der Bestimmung der neuen Werte relativ zu den alten Werten nicht erforderlich:

$$p = t_{I(+1)}\,g_{VCA(+1)} = \frac{h_{lo\_g} - h_{hi\_g}}{h_{lo} - h_{hi}}\,t_I\,g_{VCA} \qquad (11)$$

Zur Bestimmung von $t_{I(+1)}$ und $g_{VCA(+1)}$ wird zunächst entschieden og hohe oder niedrige Gainwerte bevorzugt werden. Werden niedrige Gainwerte bevorzugt, beginnt das Verfahren zur Bestimmung der beiden Werte zunächst mit dem niedrigsten zulässigen Gainwert und überprüft, ob die dazu zugehörige Integrationszeit innerhalb des zulässigen Intervalls liegt. Ergibt sich eine zu lange Integrationszeit, wird das Gain auf den nächsthöheren Wert erhöht usw., bis die zugehörige Integrationszeit innerhalb des zulässigen Intervalls liegt oder das Gain den höchsten zulässigen Wert erreicht. Um häufige Wechsel des Gainwerts zu vermeiden, kann eine Hysterese von einer Gainstufe eingesetzt werden. Bei Bevorzugung hoher Gainwerte beginnt das Verfahren mit dem höchst zulässigen Gainwert.
Die Berechnung der Offsetspannung kann nach erfolgter Berechnung der Integrationszeit entsprechend der zweiten Gleichung des Gleichungssatzes (10) vorgenommen werden. Zur Vermeidung einer nichtlinearen Oszillation zwischen zwei Offsetwerte kann auch hier eine Hysterese eingebaut werden.

Bei einem Bild mit einem konstant hohen Anteil an hohen Grauwerten kann bisweilen der Zielwert $h_{lo\_g}$ für das 0,02-Quantil aufgrund der Beschränkungen in der Einstellung der Offsetspannung nicht erreicht werden. In diesem Fall können, um den Einfluss der Offsetspannung zu erhöhen, das Gain erhöht und die Belichtungszeit verringert werden. Um diesen Zusammenhang zu veranschaulichen wird die Darstellung der Grauwerte im Gleichungssystem (9), d.h.

$$h \; = \; g_{VCA}g_{AD}lt_I \; + \; g_{VCA}g_{AD}U_{off} \qquad\qquad (12)$$

mit einer geänderten Einstellung von Gain $g_{VCA\_1}$ und Integrationszeit $t_{I\_1}$ und der beschränkten Offsetspannung $U_{off\_min}$ dargestellt

$$h \; = \; g_{VCA\_1}g_{AD}lt_{I\_1} \; + \; g_{VCA\_1}g_{AD}U_{off\_min} \, . \qquad\qquad (13)$$

Nach beiden Einstellungen wird derselbe Grauwert erreicht, wenn

$$g_{VCA\_1} \; = \; g_{VCA}\,\frac{U_{off}}{U_{off\_min}} \; ; \qquad t_{I\_1} \; = \; \frac{g_{VCA}}{g_{VCA\_1}}\,t_I \; \text{ist.} \qquad (14)$$

Beim Erhöhen des Gain muss allerdings bedacht werden, dass die minimale Integrationszeit nicht unterschritten werden darf, sodass die Bedingung

$$g_{VCA\_1} \; < \; g_{VCA}\,\frac{t_I}{t_{I\_min}} \qquad\qquad (15)$$

einzuhalten ist. Ein weiterer Grund, das Gain nicht zu sehr zu erhöhen liegt darin, dass dann auch bei genügender Lichtintensität ein verrauschtes Bild erhalten wird.

Nach der Berechnung der Offsetspannung ist zu überprüfen, ob die Integrationszeit angepasst werden muss. Gleichung (11) unterstellt, dass das Histogramm des zukünftigen Bildes das untere Quantil $h_{lo}$ bei $h_{lo\_g}$ hat. Falls dies nicht zutrifft, weil die Offsetspannung beispielsweise beschränkt ist oder nicht fein genug eingestellt werden kann, kann das Histogramm zu höheren Grauwerten verschoben sein. Diese Verschiebung kann mittels einer Neuberechnung der Integrationszeit korrigiert werden.

Die Korrektur der Integrationszeit erfolgt dabei so, dass das 0,98-Quantil $l_{hi}$ des Lichtintensitäts-Histogramms in das Ziel-0,98-Quantil $h_{hi\_g}$ des Grauwerte-Histogramms überführt wird. Mit den bekannten Werten für Offset und Gain kann die neue Integrationszeit gemäß der folgenden Gleichung ermittelt werden:

$$t_{I\_1} \; = \; \frac{\dfrac{h_{hi\_g}}{g_{VCA\_1}g_{AD}} \; - \; U_{off}}{l_{hi}} \qquad\qquad (16)$$

Bei einer ungleichmäßigen Verteilung der Lichtintensitäten im Histogramm des optischen Bildes führt eine wie oben beschriebene Belichtungsregelung anhand einer linearen Empfindlichkeitskennlinie zu geringen Bildkontrasten, die vor allem in den dunklen Bereichen des Bildes keinerlei Strukturen mehr erkennen lassen, wenn die hellen Bereiche ohne Sättigung umgewandelt werden. Daher sollte die Bildwandlung, vor allem wenn nur kleine Bereiche des optischen Bildes hohe Lichtintensitäten aufweisen, anhand einer Linlog-Empfindlichkeitskennlinie vorgenommen werden. Hierbei wird, wie oben ausgeführt ist, eine in Abschnitten definierte Empfindlichkeitskennlinie mit unterschiedlichen Steigungen, d.h. unterschiedlichen Empfindlichkeiten verwendet.

Ohne Einschränkung der Allgemeinheit wird das Verfahren im Folgenden unter Bezugnahme auf eine in zwei Abschnitten definierte Linlog-Empfindlichkeitskennlinie beschrieben. Die Bestimmung der Einstellwerte für eine in mehreren Abschnitten definierten Bildwandlung erfolgt daraus in analoger Weise.

Die Bestimmung, ob die Verteilung der Lichtintensitäten im optischen Bild gleichmäßig genug für eine Bildwandlung mit einer linearen Empfindlichkeitskennlinie ist, oder ob die Ungleichmäßigkeiten der Lichtintensitätsverteilung eine in Abschnitten definierte Linlog-Empfindlichkeitskennlinie erfordern, wird anhand eines weiteren Quantils bzw. bei einer in mehr als zwei Abschnitten definierten Linlog-Kennlinie anhand mehrerer weiterer Quantile getroffen, wobei diese in Lichtintensitäten umgerechnet werden und mit jeweils einem ihnen zugeordneten Schwellwert verglichen werden.

Bei einer in zwei Abschnitten definierten Linlog-Kennlinie hat es sich, insbesondere wenn nur kleine Bildflächen hell ausgeleuchtet sind, bewährt, nach der Bestimmung des 0,7-Quantils $h_{mid}$ dieses mittels des über die Gleichungen definierten Kameramodells in einen Lichtwert $l_{mid}$ umzurechnen. Analog wird $h_{hi}$ in $l_{hi}$ umgerechnet. Danach wird $l_{mid}/l_{hi}$ mit dem Schwellwert $h_{schwell}$=0,5 verglichen. Je nach Situation können natürlich andere Quantile und Schwellwerte verwendet werden. Insbesondere ist es möglich, die sowohl die Ordnung des Quantils als auch den Schwellwert dynamisch, d.h. aus der Grauwertverteilung des Bildhistogramms selbst abgeleitet, zu bestimmen. Im Folgenden wird jedoch ohne Einschränkung der Allgemeinheit die Bestimmung des 0,7-Quantils als Entscheidungskriterium angenommen.

Falls der Quotient kleiner als der als Schwellwert 0,5 ist, weisen 70% der Bildelemente einen Lichtwert in der unteren Hälfte des Dynamikbereichs der betrachteten Szene auf. In diesem Fall sollte die Bildwandlung mit einer Linlog-Kennlinie erfolgen, deren Empfindlichkeit in Figur 5 veranschaulicht ist.

Im Grundsatz muss für jeden der Knickpunkte der Linlog-Kennlinie ein Quantil mit einer Ordnung zwischen der Ordnung des unteren Quantils und der Ordnung des oberen Quantils wie oben in Licht umgerechnet und mit einem Schwellwert verglichen werden. Ist der Wert des jeweiligen Quotienten geringer als der jeweils zugeordnete Schwellwert, so wird der Bildwandler im Linlog-Modus mit einem dem jeweiligen Quantil zugeordneten Knickpunkt der Empfindlichkeitskennlinie betrieben.

In den oben ausgeführten Beispielen wurde das untere Quantil stets mit der Ordnung 0,02 und das obere Quantil stets mit der Ordnung 0,98 angenommen, da sich diese Ordnungen bewährt haben, wenn nur ein kleiner Bereich des Bildes sehr hell ist. Die beschriebene Belichtungskorrektur ist jedoch nicht auf Quantile dieser Ordnung beschränkt. Vielmehr können auch Quantile anderer Ordnung verwendet werden, deren Werte insbesondere auch in Abhängigkeit einer bestimmten Anwendung, beispielsweise einem Einsatz des Bildwandlers in Fahrassistenzsystemen von Kraftfahrzeugen, oder auch dynamisch in Abhängigkeit der Grauwerteverteilung im Bild bestimmt werden können.

Im Diagramm 280 der Figur 5 ist eine Linlog-Empfindlichkeitskennlinie 281 bezogen auf die Lichtintensität des optischen Bildes dargestellt, die sich nach einer Anpassung der Belichtungsregelung auf der Grundlage eines weiteren, mittleren Quantils ergibt. Die Rückrechnung von der Grauwerteverteilung des Bildes auf die Verteilung der Lichtintensitäten des optischen Bildes an der photosensitiven Fläche 11_1 des Bildwandlers 100 erfolgt dabei wie oben für die Belichtungsregelung mit linearer Empfindlichkeitskennlinie angegeben.

Ziel der Belichtungsregelung ist es, dass das mittlere Quantil $h_{mid}$ dem Schwellwert entspricht, während das untere Quantil $h_{lo}$ und das obere Quantil $h_{hi}$ immer noch mit ihren jeweiligen Zielvorgaben $h_{lo\_g}$ bzw. $h_{hi\_g}$ übereinstimmen. Zur Bestimmung des Knickpunkts der Empfindlichkeitskennlinie wird die dem Schwellwert $h_{schwell}$ entsprechende Lichtintensität $l_{mid}$ durch Rückrechnen der Grauwerteverteilung auf die Lichtintensitätsverteilung des optischen Bildes berechnet.

Die linearen Parameter dieser Empfindlichkeitskennlinie 281 werden, wie zuvor für die Belichtungsregelung mit einer linearen Empfindlichkeitskennlinie beschrieben, berechnet, wobei $h_{hi}$ und $h_{hi\_g}$ durch $h_{mid}$ bzw. $h_{mid\_g}$ ersetzt werden. Die Einstellung der Linlog-Zeit $t_{ll}$, wird in Abhängigkeit der Steigung der Kennlinie zwischen den Lichtintensitäten $l_{mid}$ und $l_{hi}$, sowie der Integrationszeit vorgenommen. Um die Steigung der Kennlinie zu erhalten, müssen die Ziel-Quantile durch die Gainfaktoren dividiert werden, so dass sich die Differenz zwischen der Integrationszeit $t_I$ und der Linlog-Zeit $t_{ll}$ darstellen lässt:

$$t_I - t_{ll} = \frac{h_{hi\_g} - h_{mid\_g}}{g_{VCA}\, g_{AD}\left(l_{hi} - l_{mid}\right)}, \qquad (17)$$

woraus man für die Einstellung der Linlog-Zeit $t_{ll}$

EP 2 095 628 B1

$$t_{ll} = t_I - \frac{h_{hi\_g} - h_{mid\_g}}{g_{VCA}g_{AD}(l_{hi} - l_{mid})} \qquad (18)$$

erhält.

Im Anschluss an die Berechnung der Linlog-Zeit wird die Linlog-Spannung berechnet. Die (normierte) Ausgangsspannung des CMOS_Chips $U_c$ am Übergang vom ersten zum zweiten Kennlinienabschnitt der Linlog-Kennlinie ergibt sich zum einen aus den Gleichungen (3a) und (3b) und zum anderen aus dem mittleren Zielquantil $h_{mid\_g}$ über Gleichung (4). Durch Gleichsetzen beider Bestimmungen der Ausgangsspannung $U_c$ erhält man:

$$\frac{t_I}{t_{ll}} (1 - U_{ll}) = \frac{h_{mid\_g}}{g_{VCA}g_{AD}} - U_{off} \qquad (19)$$

Unter Verwendung von Gleichung (18) ergibt sich für die Linlog-Spannung $U_{ll}$:

$$U_{ll} = 1 - \frac{t_{ll}}{t_I} \left(\frac{h_{mid\_g}}{g_{VCA}g_{AD}} - U_{off}\right) \qquad (20)$$

Bei vielen Bildwandlern kann die Linlog-Spannung nur in diskreten Werten eingegeben werden. Um zu verhindern, dass $l_{mid}$ in den nichtlinearen Bereich der Kennlinie verschoben wird, wird die nach Gleichung (20) berechnete Linlog-Spannung stets auf den nächst niedrigeren verfügbaren Wert abgerundet. Entsprechend dem abgerundeten Wert der Linlog-Spannung muss die Linlog-Zeit $t_{ll}$ neu berechnet werden. Hierzu wird die Steigung des zweiten Empfindlichkeitskennlinienabschnitts 283 zwischen dem Knickpunkt ($l_{mid}$, $h_{mid\_g}$) der Kennlinie und dem Punkt ($l_{hi}$, $h_{hi\_g}$) herangezogen, woraus man folgende Gleichung erhält:

$$t_I - t_{ll} = \frac{U_{C\_hi\_g} - \frac{t_I}{t_{ll}} (1 - U_{ll})}{l_{hi} - \frac{1 - U_{ll}}{t_{ll}}} \cdot \qquad (21)$$

Daraus erhält man für die Linlog-Zeit $t_{ll}$:

$$t_{ll} = \frac{t_I l_{hi} + 1 - U_{ll} - U_{C\_hi\_g}}{l_{hi}} \qquad (22)$$

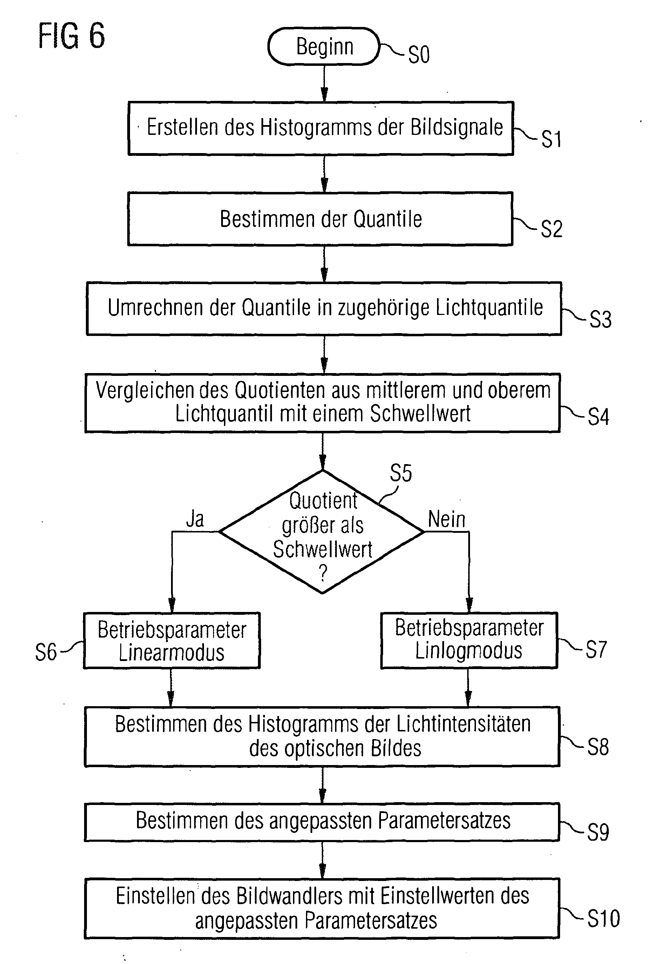

In der Figur 6 sind die grundlegenden Schritte eines Verfahrens zur Belichtungsregelung eines Linlog-Bildwandlers 100 auf der Grundlage von drei Quantilen und einer Rückrechnung von der Häufigkeitsverteilung der Bildsignale auf die Häufigkeitsverteilung der Lichtintensitäten gemäß dem oben beschriebenen mathematischen Modell eines Linlog-Bildwandlers dargestellt.

Nach dem Beginn des Verfahrens in Schritt S0 wird in Schritt S1 zunächst eine Häufigkeitsverteilung der Bildsignalwerte des von dem Linlog-Bildwandler umgewandelten optischen Bildes erstellt. Im folgenden Schritt S2 werden aus dem Histogramm dieser Häufigkeitsverteilung ein unteres, ein mittleres und ein oberes Quantil bestimmt. Die Ordnung des mittleren Quantils ist dabei größer als die Ordnung des unteren Quantils und kleiner als die Ordnung des oberen Quantils. In Schritt S3 werden die Quantile anhand des mathematischen Kameramodells in zugehörige Lichtquantile umgerechnet. In Schritt S4 wird der Quotient des mittleren und des oberen Lichtquantils mit einem Schwellwert verglichen und in Schritt S5 wird geprüft, ob der Quotient größer als der Schwellwert ist. Ist der Quotient größer als der Schwellwert, so wird in Schritt S6 der Betriebsarteinstellwert des angepassten Parametersatzes auf den Betriebsparameter des Bildwandlers für den Linearmodus gesetzt. Im anderen Fall wird der Betriebsarteinstellwert in Schritt S7 auf den Betriebsparameter für den Linlog-Modus des Bildwandlers gesetzt. In Schritt S8 wird die oben beschriebene Bestimmung der Häufigkeitsverteilung der Lichtintensitäten des optischen Bildes vorgenommen, auf deren Grundlage der für eine optimierte Belichtung angepasste Parametersatz in Schritt S9 bestimmt wird. Schließlich wird in Schritt S10 die Einstellung des Bildwandlers anhand des angepassten Parametersatzes vorgenommen, woraufhin das Verfahren mit Schritt S1 fortgeführt wird.

Eine Belichtungsregelungsvorrichtung 400 zur Anpassung der Empfindlichkeitskennlinie eines Bildwandlers an die Lichtintensitätsverteilung eines auf die photosensitive Fläche des Bildwandlers projizierten optischen Bildes ist in der Figur 6 dargestellt. Die Vorrichtung 400 umfasst einen Signaleingang 401 zum Erhalt der Bildausgangssignale des Bildwandlers 100 und einen Signalausgang 402 zum Ausgeben von Signalen zur Steuerung des Bildwandlers 100. Der Signalausgang 402 enthält mehrere Kanäle entsprechend den zu steuernden Einstellwerten des Bildwandlers 100. In dem gezeigten Beispiel sind dies die Kanäle für die Steuerung der Belichtungszeit 402_1, der Linlog-Paramter 402_2, der Offsetspannung 402_3, des VCA-Gain 402_4 und des A/D-Wandler-Gain 402_5.

Die Histogrammeinrichtung 403 ist dazu ausgebildet eine Häufigkeitsverteilung der vom Bildwandler 100 über den Signaleingang 401 empfangenen Bildsignale zu erstellen. Auf der Grundlage dieser Häufigkeitsverteilung werden in der Quantilbestimmungseinrichtung 404 das untere Quantil, das obere Quantil und bei Bedarf das mittlere oder weitere mittlere Quantile bestimmt, die in der Einstellungsberechnungseinrichtung 405 zum Erstellen eines angepassten Parametersatzes von Einstellwerten des Bildwandlers 100 herangezogen werden. Der mithilfe der Quantile der Häufigkeitsverteilung der Bildsignale erstellte Parametersatz wird an den Signalausgang 402 übertragen, worin die Einstellwerte des Parametersatzes über die, den jeweiligen Einstellwerten zugeordneten, Kanäle an den Bildwandler 100 übertragen werden.

Die Einstellungsberechnungseinrichtung 405 ist vorzugsweise dazu ausgebildet, einen Einstellwert für die Einstellung der Betriebsart des Bildwandlers 100 zu erstellen, der einen wahlweisen Betrieb des Bildwandlers im linearen oder Linlog-Modus ermöglicht. Ferner ist die Einstellungsberechnungseinrichtung 405 dazu ausgebildet Einstellwerte für die Offsetspannung der regelbaren Spannungsquelle 21, der Belichtungszeit und des Gain des Bildwandlers 100 zu erstellen.

In einer weiteren Ausführungsform enthält die Einstellungsberechnungseinrichtung 405 eine Rückrechnungseinrichtung 405_1, die zur Berechnung der Lichtintensitätsverteilung innerhalb des optischen Bildes ausgebildet ist, das dem Histogramm der Bildsignale zugrunde liegt. Die Einstellungsberechnungseinrichtung 405 kann ferner eine Schwellwertvergleichseinrichtung 405_2 umfassen, die zum Vergleich eines Quotienten von in Licht umgerechneten Quantilen mit einem Schwellwert entsprechend einem wie oben ausgeführten Verfahren ausgebildet ist. Das Ergebnis des Schwellwertvergleichs bildet die Grundlage für das in der Betriebsarteinstelleinrichtung 405_3 vorgenommene Erstellen des Betriebsarteinstellwerts.

Es sei darauf hingewiesen, dass in der Figur 6 nur diejenigen Komponenten der Vorrichtung 400 zur Belichtungsregelung eines Bildwandlers dargestellt sind, die zum Verständnis der vorliegenden Erfindung erforderlich sind. Auf die Darstellung weiterer, für den Betrieb der Vorrichtung erforderlicher oder deren weiteren Funktionsumfang bestimmender Komponenten wurde im Interesse einer übersichtlichen Darstellung verzichtet. Dennoch sind diese Komponenten als vorhanden angenommen.

Das vorgestellte Verfahren und die vorgestellte Vorrichtung können mittels einer Software realisiert werden, die zur Ausführung auf einer Datenverarbeitungseinrichtung ausgebildet ist. Die Ausführung der Software bewirkt dabei die Ausführung des Verfahrens auf der Datenverarbeitungseinrichtung so, dass die Vorrichtung 400 auf der Datenverarbeitungseinrichtung eingerichtet wird. Die Software kann in Form eines Computerprogrammprodukts eine eigenständige Form annehmen, wobei das Computerprogrammprodukt eine Reihe physikalisch unterscheidbarer Zustände aufweist, die durch eine Datenverarbeitungseinrichtung lesbar und ausführbar sind und die Instruktionen der Software verkörpern.

Die vorgestellte Belichtungsregelung mittels der Bestimmung von Quantilen auf der Grundlage einer Häufigkeitsverteilung der Bildgrauwerte ermöglicht eine äußerst schnelle Anpassung der Einstellwerte des Bildwandlers an die Verteilung der Lichtintensitäten in einem umzuwandelnden Bild. In der Praxis wird bereits in der Hälfte der Fälle das auf das Bild, das der Belichtungsregelung zugrunde gelegt wird, folgende Bild mit optimaler Kontrastgebung umgewandelt. Da bei gesättigten Bildelementen nicht korrekt auf die an diesen Stellen des optischen Bildes herrschende Lichtintensität geschlossen werden kann, ist zwar die optimale Belichtungseinstellung bei etwa 30% der Fälle erst ab dem zweiten Folgebild, bei etwa 20% erst ab dem dritten oder einem späteren Folgebild erreicht, dennoch ist auch in diesen Fällen die Anpassung der Belichtungseinstellung wesentlich schneller als mit dne herkömmlichen Verfahren.

Die Verwendung von drei oder mehr Quantilen ermöglicht darüber hinaus eine schnelle Anpassung der HDR-Funktionalität (High Dynamic Range Funktionalität) einer HDR-Kamera an die tatsächlich vorherrschenden Lichtbedingungen. Die Anpassung erfolgt über eine geeignete Festlegung des oder der Knickpunkte der Empfindlichkeitskennlinie sowie der Steigungen der einzelnen Kennlinienabschnitte. Hierdurch kann die Dynamik der Kamera besser ausgenutzt werden und auch dunklere Bildstellen weisen zufrieden stellende Kontraste auf. Der Bildkontrast wird weiterhin durch die Regelung des Offset $U_{off}$ optimiert.

Bezugszeichenliste

| | |
|---|---|
| 10 | Bildwandlungseinrichtung |
| 11 | CMOS-Chip |
| 11_1 | photosensitiven Fläche |
| 11_2 | Eingang für Belichtungszeit |
| 11_3 | Eingang für Betriebsart |
| 11_4 | Eingang für Lilogparameter |
| 11_5 | Ausgang CMOS-Chip |
| 12 | Sättigungsmodul |
| 20 | Verstärkungseinrichtung |
| 21 | steuerbaren Spannungsquelle |
| 22 | VCA |
| 23 | Analog-Digital-Wandler |
| 24 | Ausgang des Analog-Digital-Wandlers |
| 100 | Bildwandler |
| 270 | Diagramm einer Linlog-Kennlinie |
| 271 | Linlog-Empfindlichkeitskennlinie |
| 272 | erster Kennlinienabschnitt der Linlog-Kennlinie |
| 273 | zweiter Kennlinienabschnitt der Linlog-Kennlinie |
| 280 | Diagramm einer Linlog-Kennlinie für eine Anpassung der Belichtungsregelung |
| 281 | Linlog-Empfindlichkeitskennlinie für Anpassung der Belichtungsregelung |
| 282 | erster Kennlinienabschnitt der für Anpassung der Belichtungsregelung |
| 283 | zweiter Kennlinienabschnitt der für Anpassung der Belichtungsregelung |
| 300 | Histogramm der Bildgrauwerte vor der Anpassung der Belichtungsregelung |
| 310 | Histogramm der Bildgrauwerte nach linearen der An- passung der Belichtungsregelung |
| 400 | Belichtungsregelungsvorrichtung |
| 401 | Signaleingang |
| 402 | Signalausgang |
| 402_1 | Ausgangskanal für Belichtungszeit |
| 402_2 | Ausgangskanal für Linlog-Parameter |
| 402_3 | Ausgangskanal für Offsetspannung |
| 402_4 | Ausgangssignal für VCA-Gain |
| 402_5 | Ausgangskanal für A/D-Wandler-Gain |
| 403 | Histogrammeinrichtung |
| 404 | Quantilbestimmungseinrichtung |
| 405 | Einstellungsberechnungseinrichtung |
| 405_1 | Rückrechnungseinrichtung |
| 405_2 | Vergleichseinrichtung |
| 405_3 | Betriebsarteinstelleinrichtung |
| S0_S9 | Verrfahrensschritte |

**Patentansprüche**

1. Verfahren zur Anpassung der Empfindlichkeitskennlinie (271, 281) eines Bildwandlers (100) an die Lichtintensitätsverteilung eines auf die photosensitive Fläche (11_1) des Bildwandlers (100) projizierten optischen Bildes, wobei das Verfahren Schritte aufweist zum

   - Erstellen (S1) einer Häufigkeitsverteilung (300) der Bildsignalwerte des von dem Bildwandler umgewandelten optischen Bildes,
   - Bestimmen (S2) von zumindest einem ersten Quantil ($h_{lo}$), und einem zweiten Quantil ($h_{hi}$) der Häufigkeits-verteilung (300) der Bildsignalwerte, wobei die Ordnung des zweiten Quantils höher als die Ordnung des ersten Quantils ist,

- Bestimmen der Häufigkeitsverteilung der Lichtintensitäten an der photosensitiven Fläche (11_1) des Bildwandlers (100) unter Verwendung der durch den aktuellen Parametersatz von Einstellwerten des Bildwandlers (100) bestimmten Beziehung zwischen Lichtintensitäten an der photosensitiven Fläche (11_1) und den vom Bildwandler (100) ausgegebenen Bildsignalwerten,

- Erstellen (S8) eines angepassten Parametersatzes von Einstellwerten des Bildwandlers (100) so, dass das erste Quantil der sich aus der bestimmten Häufigkeitsverteilung der Lichtintensitäten hierdurch ergebenden Häufigkeitsverteilung (300) der Bildsignalwerte einem ersten Zielwert und das zweite Quantil dieser Häufigkeitsverteilung (300) einem zweiten Zielwert entspricht, und zum

- Einstellen der dem angepassten Parametersatz entsprechenden Einstellwerte.

2. Verfahren nach Anspruch 1,
   **dadurch gekennzeichnet,**
   **dass** der angepasste Parametersatz zumindest einen Betriebsarteinstellwert zur Einstellung einer Betriebsart des Bildwandlers (100) umfasst.

3. Verfahren nach Anspruch 1 oder 2,
   **dadurch gekennzeichnet,**
   **dass** der angepasste Parametersatz Werte zur Einstellung von Offset, Belichtungszeit und Gain des Bildwandlers (100) umfasst.

4. Verfahren nach einem der Ansprüche 1 bis 3,
   **dadurch gekennzeichnet,**
   **dass** das Verfahren einen Schritt (S4) zur Bestimmung des Betriebsarteinstellwerts auf der Grundlage von zumindest einem weiteren Quantil umfasst.

5. Verfahren nach Anspruch 4,
   **dadurch gekennzeichnet,**
   **dass** die Ordnung des zumindest einen weiteren Quantils höher als die Ordnung des ersten Quantils und niedriger als die Ordnung des zweiten Quantils ist.

6. Verfahren nach einem der vorangehenden Ansprüche,
   **dadurch gekennzeichnet,**
   **dass** die Bestimmung der Häufigkeitsverteilung der Lichtintensitäten an der photosensitiven Fläche (11_1) des Bildwandlers (100) auf der Grundlage eines mathematischen Modells über die Umwandlung einer Lichtintensität in ein Bildsignal mit den aktuellen Einstellwerten des Bildwandlers (100) als Parameter erfolgt.

7. Verfahren nach Anspruch 6,
   **dadurch gekennzeichnet,**
   **dass** der angepasste Parametersatz von Einstellwerten des Bildwandlers (100) aus der zuvor bestimmten Häufigkeitsverteilung der Lichtintensitäten unter Zugrundelegen des mathematischen Modells erfolgt.

8. Verfahren nach Anspruch 6 oder 7,
   **dadurch gekennzeichnet,**
   **dass** das Verfahren weitere Schritte umfasst zum

   - Vergleichen (S3) eines Quotienten aus der für das weitere Quantil bestimmten Lichtintensität und der für das zweite Quantil bestimmten Lichtintensität mit einem Schwellwert, und
   - Schalten (S9, S5, S6) des Bildwandlers in eine erste Betriebsart, wenn der zumindest eine Quotient größer als der Schwellwert ist, und Schalten des Bildwandlers eine zweite Betriebsart, wenn der zumindest eine Quotient kleiner oder gleich dem Schwellwert ist.

9. Verfahren nach Anspruch 8,
   **dadurch gekennzeichnet,**
   **dass** der Bildwandler (100) in der ersten Betriebsart eine lineare Empfindlichkeitskennlinie aufweist.

10. Verfahren nach Anspruch 8 oder 9,
    **dadurch gekennzeichnet,**
    **dass** der Bildwandler in der zweiten Betriebsart eine Emfindlichkeitskennlinie (271, 281) mit zumindest zwei linearen Kennlinienabschnitten (272, 273; 282, 283) unterschiedlicher Steigung aufweist.

**11.** Verfahren nach einem der Ansprüche 5 bis 10,
**dadurch gekennzeichnet,**
**dass** der angepasste Parametersatz Werte zur Einstellung von Linlog-Timing und Linlog-Spannung des Bildwandlers umfasst, die auf der Grundlage des zumindest einen weiteren Quantils und des zweiten Quantils ($h_{hi}$) bestimmt werden.

**12.** Verfahren nach einem der Ansprüche 5 bis 11,
**dadurch gekennzeichnet,**
**dass** die Werte des angepassten Parametersatzes zur Einstellung von Offset, Belichtungszeit und Gain des Bildwandlers auf der Grundlage des ersten Quantils ($h_{lo}$) und des zumindest einen weiteren Quantils bestimmt werden.

**13.** Vorrichtung zur Anpassung der Empfindlichkeitskennlinie eines Bildwandlers an die Lichtintensitätsverteilung eines auf die photosensitive Fläche des Bildwandlers projizierten optischen Bildes mit

- einer Histogrammeinrichtung (403) zum Erstellen einer Häufigkeitsverteilung der Bildsignalwerte des von dem Bildwandler umgewandelten optischen Bildes,
- einer Quantilbestimmungseinrichtung (404) zum Bestimmen von zumindest zwei Quantilen der Häufigkeitsverteilung der Bildsignalwerte, und
- einer Einstellungsberechnungseinrichtung (405) zum Erstellen eines angepassten Parametersatzes von Einstellwerten des Bildwandlers auf der Grundlage der bestimmten Quantile der Häufigkeitsverteilung, wobei die Einstellungsberechnungseinrichtung (405) eine Rückrechnungseinrichtung (405_1) umfasst, die ausgebildet ist, die Häufigkeitsverteilung der Lichtintensitäten an der photosensitiven Fläche des Bildwandlers zu bestimmen,

wobei Histogrammeinrichtung (403), Quantilbestimmungseinrichtung (404) und Einstellungsberechnungseinrichtung (405) zur Durchführung eines Verfahrens nach einem der Ansprüche 1 bis 12 ausgebildet sind.

**14.** Vorrichtung nach einem der Ansprüche 13,
**dadurch gekennzeichnet,**
**dass** die Einstellungsberechnungseinrichtung (405) eine Betriebsarteinstelleinrichtung zum Einstellen einer Betriebsart des Bildwandlers umfasst.

**15.** Vorrichtung nach einem der Ansprüche 13 oder 14,
**dadurch gekennzeichnet,**
**dass** die Einstellungsberechnungseinrichtung (405) eine Vergleichseinrichtung (405_2) zum Vergleichen des zumindest einen Quotienten aus der für das weitere Quantil bestimmten Lichtintensität der für das zweite Quantil bestimmten Lichtintensität mit einem Schwellwert umfasst.

**16.** Computerprogrammprodukt zur Anpassung der Empfindlichkeitskennlinie eines Bildwandlers an die Lichtintensitätsverteilung eines auf die photosensitive Fläche des Bildwandlers projizierten optischen Bildes, wobei das Computerprogrammprodukt eine Reihe physikalisch unterscheidbarer Zustände aufweist, die durch eine Datenverarbeitungseinrichtung lesbar und ausführbar sind und die eine Abfolge von Instruktionen darstellen, die auf der Datenverarbeitungseinrichtung ausgeführt ein Verfahren nach einem der Ansprüche 1 bis 12 durchführen und die Einrichtung einer Vorrichtung nach einem der Ansprüche 13 bis 15 in der Datenverarbeitungseinrichtung bewirken.

**Claims**

**1.** Method for matching the sensitivity characteristic (271, 281) of an image converter (100) to the light-intensity distribution of an optical image which is projected onto the photosensitive surface (11_1) of the image converter (100), wherein the method comprises steps for:

- creation (S1) of a frequency distribution (300) of the image signal values in the optical image converted by the image converter,
- determination (S2) of at least one first quantile ($h_{lo}$) and a second quantile ($h_{hi}$) of the frequency distribution (300) of the image signal values, the order of the second quantile being higher than the order of the first quantile,
- determination of the frequency distribution of the light intensities on the photosensitive surface (11_1) of the image converter (100) by using the relationship, determined by the actual parameter set of setting values of the image converter (100), between light intensities on the photosensitive surface (11_1) and the image signal values output by the image converter (100),
- creation (S8) of a matched parameter set of setting values of the image converter (100) such that the first quantile of the frequency distribution (300) of the image signal values resulting hereby from the determined frequency distribution of the light intensities corresponds to a first target value and the second quantile of this frequency distribution (300) corresponds to a second target value, and for
- setting the setting values corresponding to the matched parameter set.

2. Method according to claim 1, **characterised in that** the matched parameter set comprises at least one operating mode setting value for setting an operating mode of the image converter (100).

3. Method according to claim 1 or 2, **characterised in that** the matched parameter set comprises values for setting offset, lighting time and gain of the image converter (100).

4. Method according to any one of claims 1 to 3, **characterised in that** the method comprises a step (S4) for the determination of the operating mode setting value on the basis of at least one additional quantile.

5. Method according to claim 4, **characterised in that** the order of the at least one additional quantile is higher than the order of the first quantile and lower than the order of the second quantile.

6. Method according to any one of the preceding claims, **characterised in that** the frequency distribution of the light intensities on the photosensitive surface (11_1) of the image converter (100) is determined on the basis of a mathematical model via the conversion of a light intensity into an image signal with the actual setting values of the image converter (100) as parameters.

7. Method according to claim 6, **characterised in that** the matched parameter set of setting values of the image converter (100) takes place from the previously determined frequency distribution of the light intensities by using the mathematical model as a basis.

8. Method according to claim 6 or 7, **characterised in that** the method comprises additional steps for

- comparing (S3) a quotient from the light intensity determined for the additional quantile and the light intensity determined for the second quantile with a threshold value, and
- switching (S9, S5, S6) the image converter into a first operating mode if the at least one quotient is greater than the threshold value, and switching the image converter [into] a second operating mode if the at least one quotient is less than or equal to the threshold value.

9. Method according to claim 8, **characterised in that** in the first operating mode the image converter (100) has a linear sensitivity characteristic.

10. Method according to claim 8 or 9, **characterised in that** in the second operating mode the image converter has a sensitivity characteristic (271, 281) with at least two linear characteristic sections (272, 273; 282, 283) with different gradients.

11. Method according to any one of claims 5 to 10, **characterised in that** the matched parameter set comprises values for setting lin-log timing and lin-log voltage of the image converter which are determined on the basis of the at least one additional quantile and the second quantile ($h_{hi}$).

12. Method according to any one of claims 5 to 11, **characterised in that** the values of the matched parameter set for setting offset, lighting time and gain of the image converter are determined on the basis of the first quantile ($h_{lo}$) and the at least one additional quantile.

13. Device for matching the sensitivity characteristic of an image converter to the light-intensity distribution of an optical image which is projected onto the photosensitive surface of the image converter, comprising

- a histogram mechanism (403) for creating a frequency distribution of the image signal values of the optical image converted by the image converter,

- a quantile determining device (404) for determining at least two quantiles of the frequency distribution of the image signal values, and
- a setting calculation system (405) for creation of a matched parameter set of setting values of the image converter on the basis of the determined quantiles of the frequency distribution, the setting calculation system (405) comprising a back-calculation system (405_1) which is embodied to determine the frequency distribution of the light intensities on the photosensitive surface of the image converter,

wherein histogram mechanism (403), quantile determining device (404) and setting calculation system (405) are embodied to carry out a method according to any one of claims 1 to 12.

14. Device according to any one of claims 13, **characterised in that** the setting calculation system (405) comprises an operating mode setting mechanism for setting an operating mode of the image converter.

15. Device according to either claim 13 or 14, **characterised in that** the setting calculation system (405) comprises a comparator (405_2) for comparing the at least one quotient from the light intensity determined for the additional quantile [and] the light intensity determined for the second quantile with a threshold value.

16. Computer program product for matching the sensitivity characteristic of an image converter to the light intensity distribution of an optical image which is projected onto the photosensitive surface of the image converter, the computer program product comprising a series of physically distinguishable states which can be read and executed by a data processing system and which constitute a sequence of instructions which, executed on the data processing system, carry out a method according to any one of claims 1 to 12 and produce the system of a device according to any one of claims 13 to 15 in the data processing system.

**Revendications**

1. Procédé pour adapter la courbe caractéristique de sensibilité (271, 281) d'un convertisseurs d'images (100) à la distribution d'intensité lumineuse d'une image optique projetée sur la surface photosensible (11_1) du convertisseur d'images (100), dans lequel le procédé présente les étapes consistant à :

   - générer (S1) une distribution de fréquence (300) des valeurs de signal d'image de l'image optique transformée par le convertisseur d'images,
   - déterminer (S2) au moins un premier quantile ($h_{lo}$) et un deuxième quantile ($h_{hi}$) de la distribution de fréquence (300) des valeurs de signal d'image, le rang du deuxième quantile étant supérieur à celui du premier quantile,
   - déterminer la distribution de fréquence des intensités lumineuses sur la surface photosensible (11_1) du convertisseur d'images (100) en utilisant la relation, déterminée par le jeu de paramètres actuel des valeurs de réglage du convertisseur d'images (100), entre les intensités lumineuses sur la surface photosensible (11_1) et les valeurs de signal d'image délivrées par le convertisseur d'images (100),
   - générer (S8) un jeu de paramètres adapté de valeurs de réglage du convertisseur d'images (100) de sorte que le premier quantile de la distribution de fréquence (300) des valeurs de signal d'image, résultant ici de la distribution de fréquence déterminée des intensités lumineuses, corresponde à une première valeur cible et que le deuxième quantile de cette distribution de fréquence (300) corresponde à une deuxième valeur cible, et à
   - régler les valeurs de réglage correspondant au jeu de paramètres adapté.

2. Procédé selon la revendication 1,
   **caractérisé en ce que**
   le jeu de paramètres adapté comprend au moins une valeur de réglage de mode de fonctionnement pour régler un mode de fonctionnement du convertisseur d'images (100).

3. Procédé selon la revendication 1 ou 2,
   **caractérisé en ce que**
   le jeu de paramètres adapté comprend des valeurs pour le réglage du décalage, du temps d'exposition et du gain du convertisseur d'images (100).

4. Procédé selon l'une quelconque des revendications 1 à 3,
   **caractérisé en ce que**
   le procédé comprend une étape (S4) pour déterminer la valeur de réglage de mode de fonctionnement sur la base d'au moins un autre quantile.

5. Procédé selon la revendication 4,
**caractérisé en ce que**
le rang du au moins un autre quantile est supérieur à celui du premier quantile et inférieur au rang du deuxième quantile.

6. Procédé selon l'une quelconque des revendications précédentes, **caractérisé en ce que**
la détermination de la distribution de fréquence des intensités lumineuses sur la surface photosensible (11_1) du convertisseur d'images (100) s'effectue sur la base d'un modèle mathématique par le biais de la transformation d'une intensité lumineuse en un signal d'image avec les valeurs de réglage actuelles du convertisseur d'images (100) comme paramètres.

7. Procédé selon la revendication 6,
**caractérisé en ce que**
le jeu de paramètres adapté de valeurs de réglage du convertisseur d'images (100) s'effectue à partir de la distribution de fréquence préalablement déterminée des intensités lumineuses en se basant sur le modèle mathématique.

8. Procédé selon la revendication 6 ou 7,
**caractérisé en ce que**
le procédé comprend d'autres étapes consistant à :

- comparer (S3) un quotient de l'intensité lumineuse déterminée pour l'autre quantile et de l'intensité lumineuse déterminée pour le deuxième quantile à une valeur de seuil, et
- commuter (S9, S5, S6) le convertisseur d'images à un premier mode de fonctionnement si le au moins un quotient est supérieur à la valeur de seuil et commuter le convertisseur d'images à un second mode de fonctionnement si le au moins un quotient est inférieur ou égal à la valeur de seuil.

9. Procédé selon la revendication 8,
**caractérisé en ce que**
le convertisseur d'images (100) présente, dans le premier mode de fonctionnement, une courbe caractéristique de sensibilité linéaire.

10. Procédé selon la revendication 8 ou 9,
**caractérisé en ce que**
le convertisseur d'images présente, dans le second mode de fonctionnement, une courbe caractéristique de sensibilité (271, 281) avec au moins deux sections de courbe caractéristique linéaires (272, 273 ; 282, 283) de pente différente.

11. Procédé selon l'une quelconque des revendications 5 à 10, **caractérisé en ce que**
le jeu de paramètres adapté comprend des valeurs pour régler la synchronisation linéaire-logarithmique et la tension linéaire-logarithmique du convertisseur d'images, qui sont déterminées sur la base du au moins un autre quantile et du deuxième quantile ($h_{hi}$).

12. Procédé selon l'une quelconque des revendications 5 à 11, **caractérisé en ce que**
les valeurs du jeu de paramètres adapté sont déterminées pour régler le décalage, le temps d'exposition et le gain du convertisseur d'images sur la base du premier quantile ($h_{lo}$) et du au moins un autre quantile.

13. Dispositif pour adapter la courbe caractéristique de sensibilité d'un convertisseur d'images à la distribution d'intensité lumineuse d'une image optique projetée sur la surface photosensible du convertisseur d'images, avec

- un dispositif d'histogramme (403) pour générer une distribution de fréquence des valeurs de signal d'image de l'image optique transformée par le convertisseur d'images,
- un dispositif de détermination de quantile (404) pour déterminer au moins deux quantiles de la distribution de fréquence des valeurs de signal d'image, et
- un dispositif de calcul de réglage (405) pour générer un ensemble de paramètres adapté de valeurs de réglage sur la base des quantiles déterminés de la distribution de fréquence, dans lequel le dispositif de calcul de réglage (405) comprend un dispositif de re-calcul (405_1) qui est conçu pour déterminer la distribution de fréquence des intensités lumineuses sur la surface photosensible du convertisseur d'images,

le dispositif d'histogramme (403), le dispositif de détermination de quantile (404) et le dispositif de calcul de réglage (405) étant formés pour mettre en oeuvre un procédé selon l'une quelconque des revendications 1 à 12.

**14.** Dispositif selon la revendication 13,
**caractérisé en ce que**
le dispositif de calcul de réglage (405) comprend un dispositif de réglage de mode de fonctionnement pour régler un mode de fonctionnement du convertisseur d'images.

**15.** Dispositif selon l'une quelconque des revendications 13 ou 14, **caractérisé en ce que**
le dispositif de calcul de réglage (405) comprend un dispositif de comparaison (405_2) pour comparer le au moins un quotient de l'intensité lumineuse déterminée pour l'autre quantile à l'intensité lumineuse déterminée pour le deuxième quantile à une valeur de seuil.

**16.** Produit de programme informatique pour adapter la courbe caractéristique de sensibilité d'un convertisseur d'images à la distribution d'intensité lumineuse d'une image optique projetée sur la surface photosensible du convertisseur d'images, dans lequel le produit de programme informatique présente une série d'états pouvant se distinguer physiquement, qui sont lisibles et exécutables par un dispositif de traitement des données et qui représentent une suite d'instructions qui, exécutées sur le dispositif de traitement de données, réalisent un procédé selon l'une quelconque des revendications 1 à 12 et impliquent l'aménagement d'un dispositif selon l'une quelconque des revendications 13 à 15 dans le dispositif de traitement de données.

# FIG 1

FIG 2

FIG 3

## FIG 4

## FIG 5

**FIG 6**

```
                    ( Beginn )──S0

        Erstellen des Histogramms der Bildsignale ──S1

              Bestimmen der Quantile ──S2

     Umrechnen der Quantile in zugehörige Lichtquantile ──S3

     Vergleichen des Quotienten aus mittlerem und oberem
              Lichtquantil mit einem Schwellwert ──S4

                          S5
                    ◇ Quotient
         Ja        größer als        Nein
                   Schwellwert
                        ?

   S6── Betriebsparameter          Betriebsparameter ──S7
          Linearmodus                 Linlogmodus

        Bestimmen des Histogramms der Lichtintensitäten
                 des optischen Bildes ──S8

        Bestimmen des angepassten Parametersatzes ──S9

     Einstellen des Bildwandlers mit Einstellwerten des
              angepassten Parametersatzes ──S10
```

FIG 7

**EP 2 095 628 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10318499 A1